# EUROPEAN PATENT APPLICATION

(11) **EP 4 400 707 A1**
(43) Date of publication of application: **17.07.2024**
(21) Application number: 24150949.6
(22) Date of filing: 09.01.2024
(51) Int. Cl.: F02K 1/38, F02K 1/48

(54) **EXHAUST MIXER WITH PROTRUSIONS**

(30) Priority: 10.01.2023 US 202318152344
(71) Applicant: PRATT & WHITNEY CANADA CORP., Longueuil, Québec J4G 1A1 (CA)
(72) Inventor: YARAS, Metin llbay, (01BE5) Longueuil, J4G 1A1 (CA); CUNNINGHAM, Mark, (01BE5) Longueuil, J4G 1A1 (CA); RAMAMURTHY, Raja, (01BE5) Longueuil, J4G 1A1 (CA)
(74) Representative: Dehns

(57) **Abstract**

An exhaust mixer assembly for a gas turbine engine (10) includes a core passage (26) directing a core flow. An outer annular passage (24) directing a bypass flow surrounds the core passage (26). A lobed exhaust mixer (32) communicating with the passages has upstream and downstream ends (36, 38) and a lobed annular wall (34) therebetween. The annular wall (34) defines alternating inner and outer radial lobes (42, 44) having exits defining a mixing plane for the core and bypass flows. The outer lobes (44) protrude into the outer passage (24) and the inner lobes (42) protrude into the core passage (26). The inner lobes (42) include troughs (46) and the outer lobes (44) include crests (48). Adjacent inner and outer lobes (42, 44) have radial walls (50) interconnecting adjacent troughs (46) and crests (48). Protrusions (52) extend axially from a downstream end (38) of the annular wall (34) to form a mixer jagged trailing edge (54). Each protrusion (52) is spaced apart from one another and protrudes independently from one along the annular wall (34).

## Description

### TECHNICAL FIELD

The disclosure relates generally to aircraft engines and, more particularly, to exhaust mixers for aircraft engines.

### BACKGROUND

In turbofan engines, high velocity gases from the turbofan core are mixed with low velocity air from the bypass duct, and the air-gas mixture is then exhausted from the engine. Turbofan engines generally use exhaust mixers in order to increase the mixing of the high and low velocity fluid flows and provide additional thrust. Various different configurations of exhaust mixers have been used in order to increase the mixing of the fluid flows. For instance, it is known to use lobed-shaped exhaust mixers in order to provide an increase in the mixing of the core and bypass fluid flows by increasing the contact area of the two flows and creating vortices downstream of the mixer. Increased mixing of the high and low velocity flows increases the performance of turbofan engines.

However, there remains a need for improvement mixing solutions.

### SUMMARY

In one aspect, there is provided an exhaust mixer assembly for a gas turbine engine, the exhaust mixer assembly comprising a core passage extending along a central axis of the gas turbine engine for directing a core gas flow, an outer annular passage coaxially surrounding the core passage for directing a bypass gas flow, and a lobed exhaust mixer communicating with the core passage and the outer annular passage, the lobed exhaust mixer having an upstream end, a downstream end and a lobed annular wall extending therebetween, the lobed annular wall defining a plurality of circumferentially distributed alternating inner radial lobes and outer radial lobes, the inner radial and outer radial lobes having exits defining a mixing plane at which the core gas flow and the bypass gas flow are mixed, the outer radial lobes protruding radially into the annular outer passage and the inner radial lobes protruding radially into the core passage, the inner radial lobes including troughs forming an inner radial portion thereof and the outer radial lobes including crests forming an outer radial portion thereof, adjacent inner and outer radial lobes having radial walls interconnecting adjacent troughs and crests, one radial wall of the radial walls being positioned between each trough and each crest, a plurality of protrusions extending axially from a downstream end of the lobed annular wall to form a jagged trailing edge of the lobed exhaust mixer, each of the plurality of protrusions spaced apart from one another along the lobed annular wall and protruding independently from one another from the lobed annular wall.

In another aspect, there is provided a turbofan exhaust mixer comprising a lobed annular wall extending around a central axis, the lobed annular wall extending axially from an upstream end to a downstream end and defining a plurality of circumferentially distributed lobes, the plurality of circumferentially distributed lobes including alternating valleys and crests having respective upstream ends, the lobed annular wall, at its downstream end, extending radially relative to the central axis from a radially inward-most location defined by two adjacent ones of the valleys to a radially outward-most location defined by one of the crests located between the two adjacent ones of the valleys, a plurality of protrusions extending axially from the downstream end of the lobed annular wall to form a jagged trailing edge of the turbofan exhaust mixer, each of the plurality of protrusions spaced apart from one another along the lobed annular wall and protruding independently from one another from the lobed annular wall.

In a further aspect, there is provided a method for operating a turbofan engine, comprising directing a core gas flow through a main gas path of the turbofan engine, directing a bypass gas flow through an annular bypass passage of the turbofan engine, mixing the core gas flow and the bypass gas flow at a lobed exhaust mixer in fluid communication with the main gas path and the annular bypass passage, the lobed exhaust mixer having an upstream end, a downstream end and a lobed annular wall extending therebetween, a plurality of protrusions extending axially from a downstream end of the lobed annular wall to form a jagged trailing edge of the lobed exhaust mixer, each of the plurality of protrusions spaced apart from one another along the lobed annular wall and protruding independently from one another from the lobed annular wall, and exhausting a mixture of the core gas flow and the bypass gas flow from the turbofan engine,

### BRIEF DESCRIPTION OF THE DRAWINGS

Reference is now made to the accompanying figures in which:
FIG. 1 is a schematic cross-sectional view of a gas turbine engine having an exhaust mixer in accordance with the present disclosure;
FIG. 2 is a side elevation view of the exhaust mixer of the engine of FIG. 1, according to an embodiment of the present disclosure;
FIG. 3 is an enhanced view of the trailing edge of the exhaust mixer of FIG. 2;
FIG. 4 is a side elevation view of an exhaust mixer for the engine of FIG. 1, according to another embodiment of the present disclosure; and
FIG. 5 is an enhanced view of the trailing edge of the exhaust mixer of FIG. 4.

### DETAILED DESCRIPTION

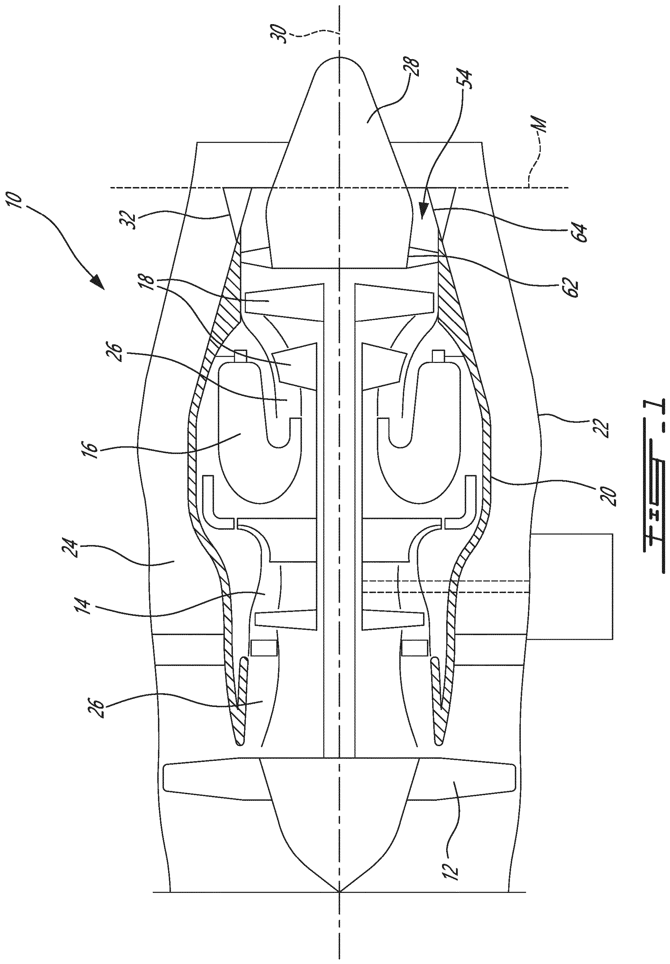

FIG. 1 illustrates a gas turbine engine 10 of a type preferably provided for use in subsonic flight, illustratively a long cowl turbofan engine, generally comprising in serial flow communication a fan 12 through which ambient air is propelled, a compressor section 14 for pressurizing the air, a combustor 16 in which the compressed air is mixed with fuel and ignited for generating an annular stream of hot combustion gases, and a turbine section 18 for extracting energy from the combustion gases.

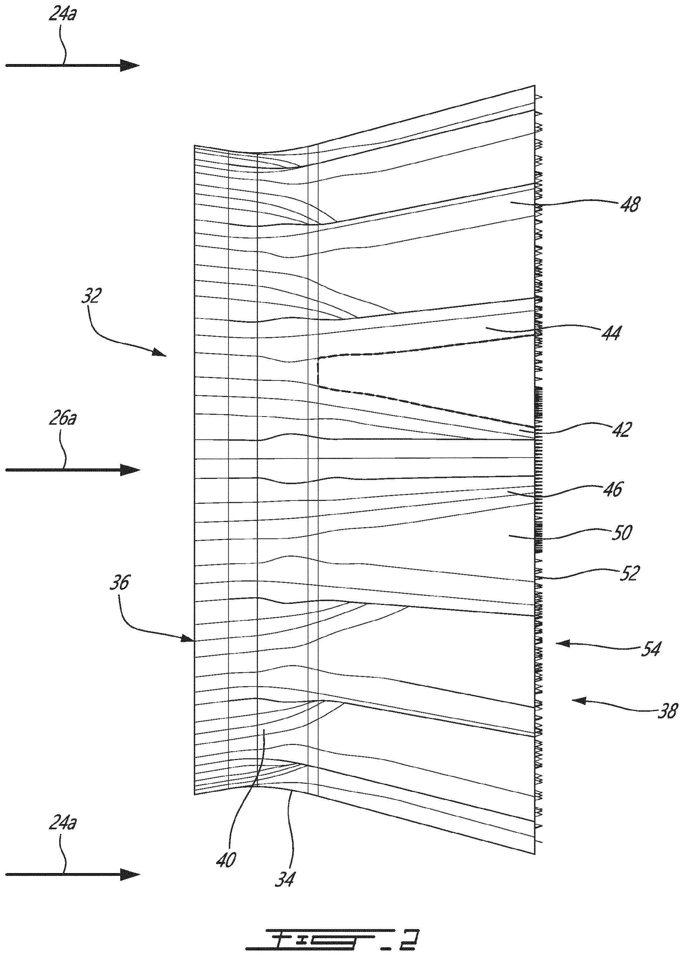

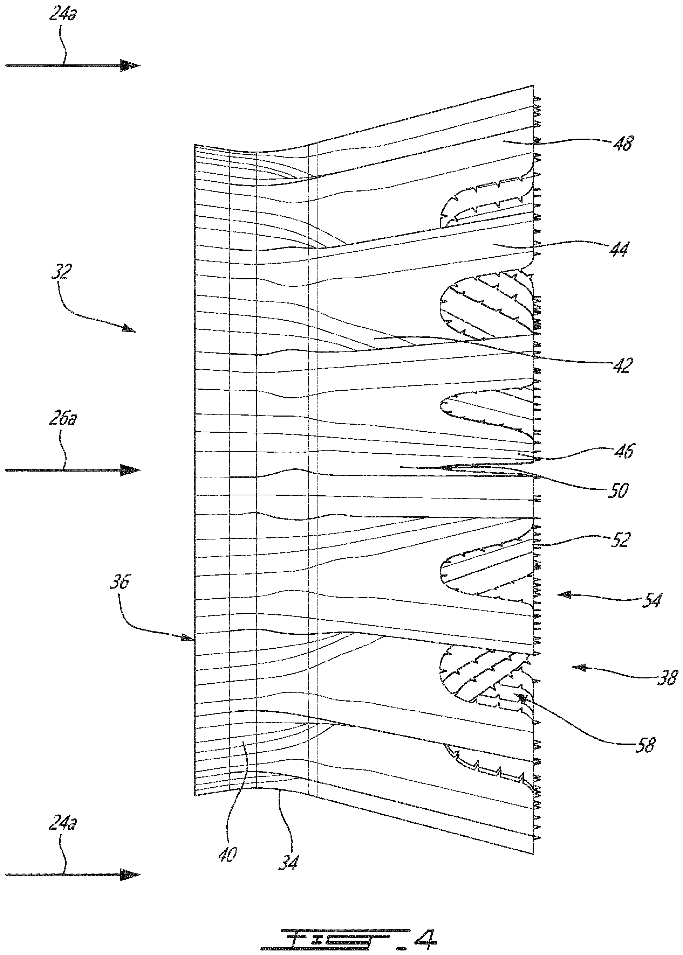

The gas turbine engine 10 includes a first casing 20 which encloses the turbo machinery of the engine, and a second, outer casing 22 extending outwardly of the first casing 20 such as to define an annular bypass passage 24 therebetween, also referred to as a bypass duct or an annular outer passage. The air propelled by the fan 12 is split into a first portion which flows around the first casing 20 within the bypass passage 24, and a second portion which flows through a main gas path 26, also referred to as a core passage, which is defined within the first casing 20 and allows the gas flow to circulate through the multistage compressor 14, combustor 16 and turbine section 18 as described above. A core gas flow 26a is said to flow through the main gas path 26, while a bypass gas flow 24a is said to flow through the bypass passage 24 (see FIGS. 2 and 4).

At the aft end of the engine 10, an axisymmetrical bullet 28 is centered on a longitudinal axis 30 (also referred to as the main axis) of the engine 10 and defines an inner wall of the main gas path 26 so that the combustion gases flow therearound. An annular exhaust mixer 32 surrounds at least a portion of the bullet 28, the mixer 32 acting as a rearmost portion of the outer wall defining the main gas path 26 and a rearmost portion of the inner wall defining the bypass passage 24. The hot combustion gases from the main gas path 26 and the cooler gas (i.e., air) from the bypass passage 24 are thus mixed together by the mixer 32 at the mixing plane M (generally located at the exit of the mixer 32) such as to produce an exhaust yielding a greater thrust. In a long cowl turbofan engine, the casing 22 extends beyond the mixing plane M, and often also beyond the trailing edge of bullet 28 (although the latter is not required). An exhaust mixer assembly may be said to include the exhaust mixer 32 and the downstream portions of the annular bypass passage 24 and the main gas path 26.

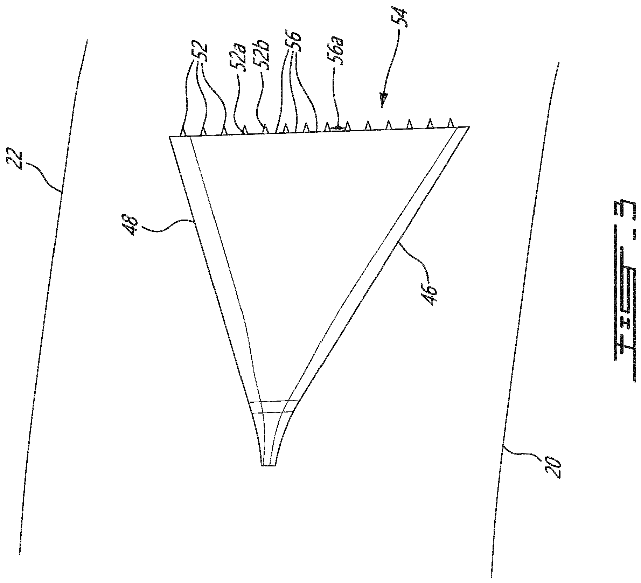

Referring to FIGS. 2 and 3, the mixer 32 includes an annular wall 34 defining an upstream end 36 of the mixer 32 along which the flows from the main gas path 26 and from the bypass passage 24 are received, and a downstream end 38, i.e. trailing edge, where the two flows meet and are mixed together. Illustratively, the mixer 32 includes an optional front frustoconical portion 40 towards the upstream end 36. In other embodiments, the upstream portion of the annular wall 34 may have a consistent diameter along its axial length.

The annular wall 34 defines a plurality of circumferentially distributed lobes extending rearwardly from the front frustoconical portion 40 of the mixer 32. The lobes include alternating inner radial lobes 42 and outer radial lobes 44, with the outer lobes 44 extending into the bypass passage 24 and the inner lobes 42 extending into the main gas path 26 (see FIG. 1). In the embodiment shown, each lobe 42, 44 has a radially elongated cross-section and extends longitudinally from the frustoconical portion 40 to lobe exits at the downstream end 38 of the mixer 32. The inner lobes 42 include troughs 46 (also referred to as valleys) forming an inner radial portion thereof and the outer lobes 44 include crests 48 forming an outer radial portion thereof. Between each adjacent trough 46 and crest 48, adjacent lobes 42, 44 combine to form a radial wall 50 interconnecting the adjacent trough 46 and crest 48. In some cases, each lobe 42, 44 combines to form two parallel radial walls 50. In other embodiments, the radial walls 50 need not be parallel, i.e. they may be straight and non-parallel and/or may not be purely radial, for example, the radial walls 50 may form arcs.

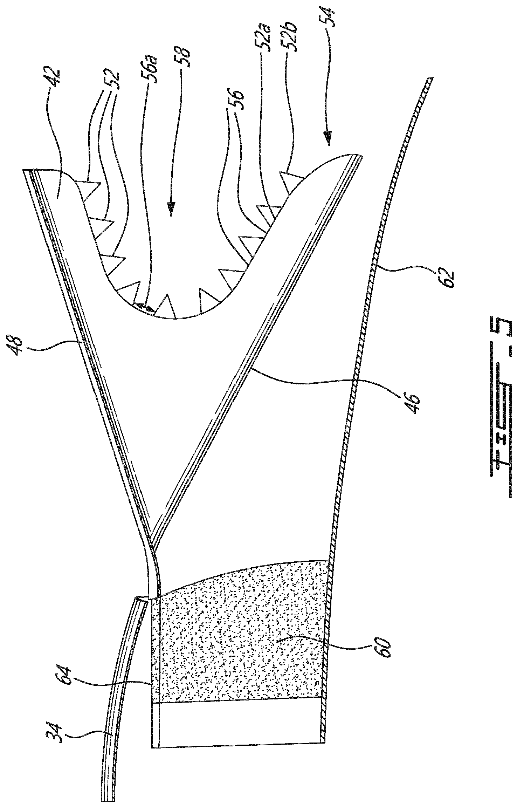

The overall shape of the inner and outer lobes 42, 44 of the mixer 32 may increase the area of the shear layer between the core and bypass flows to increase mixing of the flows. The lobes 42, 44 also include a series of spaced-apart protrusions 52, also referred to as chevrons, at the downstream end 38, thereby forming a jagged trailing edge 54 with the plurality of spaced-apart protrusions 52 distributed at the distal end of the radial walls 50. The spaced-apart protrusions 52 extend in a downstream direction from the downstream end 38. In embodiment shown in FIG. 3, the protrusions 52 extend axially in a downstream direction with respect to the longitudinal axis 30, while in other embodiments, the protrusions 52 may extend in various directions (e.g., see FIGS. 4 and 5). Illustratively, each protrusion 52 extends from a protrusion base 52a at the mixer 32 to a protrusion tip 52b. A plurality of gaps 56, also referred to as landings, along the trailing edge 54 define the spacing between the spaced-apart protrusions 52. Stated differently, a width 56a between bases 52a of adjacent protrusions 52 along the annular wall 34 is defined such that each protrusions 52 is spaced apart from the other protrusions 52 and protrudes independently from the other protrusions 52 from the annular wall 34. As will be discussed in further detail below, the spaced-apart protrusions 52 are operable to enhance the mixing process by promoting three-dimensional instability modes of the free shear layer between the flow through main gas path 26 and the flow through the bypass passage 24. The number, size and shape of the protrusions 52, as well as the spacing between the protrusions 52 (i.e., the width of gaps 56) may be optimized to promote mixing downstream of the mixer 32, as will be discussed in further detail below. The protrusions 52 may be further operable to improve engine acoustics and performance (e.g., specific fuel consumption) due to its affect on the gas flow interface at the engine exhaust.

The various lobes 42, 44 are operable to create streamwise vortices downstream of the mixer 32 to promote mixing of the bypass gas flow from the annular bypass passage 24 and the core gas flow from the main gas path 26 by deforming other vortices that exist in the free shear layer. For instance, the vortices may be generated by a pressure and velocity difference between the crest 48 and trough 46 regions of the lobed mixer 32. The spaced-apart protrusions 52 are operable for improving the mixing by promoting the three-dimensional instability modes and by accelerating the rate of growth of the vortices that develop in the free shear layer. To do so, the spaced-apart protrusions 52 are operable to create small-scale perturbations in the two flows.

The vortices downstream of the mixer 32 may be time-periodic and form at given frequencies. As such, in various embodiments, the protrusions 52 may be sized, oriented and/or shaped to create the small-scale perturbations at specific wavelengths to promote a displacement of shift of the free-shear layer to form the vortices closer (i.e., further upstream) to the mixer 32. Stated differently, the protrusions 52 are introduced (i.e., "superimposed") on the trailing edge 54 to promote three dimensional instability modes of the free shear layer between the core and bypass flows. Promotion of such instability modes may accelerate the formation and subsequent evolution of the vortices (for instance Kelvin-Helmholtz vortices) downstream of the mixer 32, thus complementing the mixing enhancement effects of the lobes 42, 44. In various cases, the protrusions 52 may be integrated into the mixer 32, i.e., formed from one piece of sheet metal. In other cases, the protrusions 52 may be subsequently added (e.g., welded) to an already-formed mixer 32.

A freeshear layer is formed at the trailing edge 54 of the mixer 32 by way of the meeting of two boundary layers, i.e., the core gas flow 26a flowing along a radially inner surface of the annular wall 34 and the bypass gas flow 24a flowing along a radially outer surface of the annular wall 34. A freeshear layer may therefore form at the trailing edge 54 due to the superposition of these two boundary layers, said freeshear layer deforming and diffusing downstream of the mixer 32 as the two main and bypass flows mix. As such, in various embodiments, the protrusions 52 may be sized and/or shaped to correspond with, or be comparable to, the developed freeshear layer thickness at the trailing edge 54 of the mixer 32. Stated differently, the size and/or shape of the protrusions 52 are specific to the characteristics of the freeshear layer immediately downstream of the trailing edge 54 of the mixer 32 so as to produce flow perturbations of suitable magnitude for the above-mentioned displacement or shift of the free-shear layer. Illustratively, the protrusions 52 have triangular, tooth-like shapes, although other shapes may be contemplated. Likewise, the span wise spacing 56a between the protrusions 52 (i.e., the width of gaps 56) may be sized to correlate with the spacing of velocity streaks in the upstream turbulent boundary layer. While the number, size and shape of the protrusions 52 may vary, the protrusions 52 are preferably identical to one another and spaced evenly from one another (i.e., each gap 52 has an equal width) along the trailing edge 54 of the mixer 32. Other arrangements may be contemplated, for instance gaps 56 of unequal widths.

Various factors may dictate the stability and turbulence characteristics of the above-mentioned boundary layers. For instance, such factors may include the wall-normal distributions of streamwise velocity (i.e., the velocity profile) within the boundary layers that develop along the radially inner and outer surfaces of the annular wall 34 in conjunction with the Reynolds numbers of these boundary layers that is based on a characteristic reference length of the boundary layer. This characteristic reference length may be, for instance, a thickness, displacement thickness, or momentum thickness of the boundary layer. Turbulent transient vortical motions within the boundary layer may promote fluctuations or perturbations in the instantaneous streamwise velocity field of the boundary layer that typically results in approximately streamwise oriented high- and low- velocity streaks (i.e., streamwise elongated regions with higher/lower velocity than the surroundings of these regions) in the instantaneous streamwise velocity field. The span-wise spacing of these streaks may be within predictable ranges as dictated by the velocity profile and Reynolds number of the boundary layer. The span wise spacing 56a between the protrusions 52 may thus be correlated with the spacing of these streaks to maximize the effect that the protrusions 52 have on the development of the instability-caused vortices in the downstream free shear layer.

Referring to FIGS. 4 and 5, in another embodiment, the mixer 32 is a scalloped mixer. Stated differently, the annular wall 34 includes scalloped shaped cutouts 58 between adjacent troughs 46 and crests 48. Each scalloped-shaped cutout 58 extends from the downstream end 38 of the mixer 32 in an upstream direction, creating a curved cutout that narrows in width towards the upstream direction. The spaced-apart protrusions 52 are disposed (or superimposed) along the trailing edge 54, which includes the scalloped shaped cutouts 58. In this embodiment, the protrusions 52 extend both axially with respect to the longitudinal axis 30 and in a direction normal to each protrusion 52's respective location along the scalloped shaped cutouts 58.

As was the case in the embodiment shown in FIGS. 2 and 3, the protrusions 52 on the mixer of FIGS. 4 and 5 may be sized and/or shaped to correspond with, or be comparable to, the developed freeshear layer thickness at the trailing edge 54 of the mixer 32. Illustratively, the protrusions 52 have triangular, tooth-like shapes, although other shapes may be contemplated. Likewise, the span wise spacing between the protrusions 52 (i.e., the width of gaps 56) may be sized to correlate with the spacing of velocity streaks in the upstream turbulent boundary layer. The number, size, shape of and spacing between the protrusions 52 may vary along the trailing edge 54 of the mixer 32, while the local size, shape of and spacing between the protrusions 52 may be dictated by the characteristics of the local turbulent boundary layers on the radially inner and outer surfaces of the annular wall 34. While the dimensions of the scalloped-shaped cutouts 58 (e.g., their radial depth and/or their axial width) may vary, the scalloped-shaped cutouts 58 are preferably identically sized and shaped to one another.

FIG. 5 further shows a strut 60 disposed in the main gas path 26. When implemented, one or more struts 60 may swirl or de-swirl the flow though the main gas path 26 to promote mixing. In some embodiments, The extent of swirling or de-swirling realized by the struts 60 may vary , for instance along a span of the struts, to promote development of regions of streamwise vorticity that is favourable to mixing of the main and bypass flows downstream of mixer 32. Various numbers and shapes of struts 60 may be contemplated. In various cases, this number may be inferior to, equal to, or exceed the number of scalloped-shaped cutouts 58. In some cases, one or more struts may be additionally or alternatively disposed in the annular bypass passage 24. In other cases, the strut(s) 60 may be omitted. Referring additionally to FIG. 1, an annular hub 62 and an annular shroud 64 are provided with the mixer 32 attached thereto, the shroud 64 and the mixer 32 surrounding the hub 62 to form an annular exhaust gas duct 66 disposed radially therebetween.

According to an exemplary embodiment, there is taught a method for operating a turbofan engine 10. A core gas flow 26a is directed through a main gas path 26 of the turbofan engine 10. A bypass gas flow 24a is directed through an annular bypass passage 24 of the turbofan engine 10. The core gas flow 26a and the bypass gas flow 24a are mixed at a lobed exhaust mixer 32 in fluid communication with the main gas path 26 and the annular bypass passage 24, the lobed exhaust mixer 32 having an upstream end 36, a downstream end 38 and a lobed annular wall 34 extending therebetween, a plurality of protrusions 52 extend axially from a downstream end of the lobed annular wall 34 to form a jagged trailing edge 54 of the lobed exhaust mixer 32, each of the plurality of protrusions 52 spaced apart from one another along the lobed annular wall 34 and protruding independently from one another from the lobed annular wall 34. A mixture of the core gas flow 26a and the bypass gas 24a flow is then exhausted from the turbofan engine.

According to an exemplary embodiment, there is taught a method for manufacturing an exhaust mixer assembly for a gas turbine engine 10. A core passage 26 is provided, the core passage 26 extending along a central axis 30 of the gas turbine engine 10 for directing a core gas flow 26a. An outer annular passage 24 is provided, the outer annular passage 24 coaxially surrounding the core passage 26 for directing a bypass gas flow 24a. A lobed exhaust mixer 32 is provided, the lobed exhaust mixer 32 communicating with the core passage 26 and the outer annular passage 24, the lobed exhaust mixer 32 having an upstream end 36, a downstream end 38 and a lobed annular wall 34 extending therebetween, the lobed annular wall 34 defining a plurality of circumferentially distributed alternating inner radial lobes 42 and outer radial lobes 44, the inner radial 42 and outer radial lobes 44 having exits defining a mixing plane M at which the core gas flow 26a and the bypass gas flow 24a are mixed, the outer radial lobes 44 protruding radially into the annular outer passage 24 and the inner radial lobes 42 protruding radially into the core passage 26, the inner radial lobes 42 including troughs 46 forming an inner radial portion thereof and the outer radial lobes 44 including crests 48 forming an outer radial portion thereof, adjacent inner 42 and outer radial lobes 44 having radial walls 50 interconnecting adjacent troughs 46 and crests 48, one radial wall 50 of the radial walls 50 being positioned between each trough 46 and each crest 48. A plurality of protrusions 52 are provided, the plurality of protrusions 52 extending axially from a downstream end of the lobed annular wall 34 to form a jagged trailing edge 54 of the lobed exhaust mixer 32, each of the plurality of protrusions 52 spaced apart from one another along the lobed annular wall 34 and protruding independently from one another from the lobed annular wall 34. Dimensions of the plurality of protrusions 52 are selected as function of freeshear layer between the core gas flow 26a and the bypass gas flow 24a at the trailing edge 54 of the lobbed exhaust mixer 32, for instance to correspond with a thickness of the freeshear layer at the trailing edge 54 of the lobed exhaust mixer 32. Spacing 56a between adjacent pairs of the plurality of protrusions 52 are selected to correlate with a spacing of velocity streaks developed in a turbulent boundary layer upstream of the lobed exhaust mixer 32.

It can be appreciated from the foregoing that at least some embodiments include an exhaust mixer including spaced-apart protrusions at its trailing edge, thereby allowing for efficient, improved mixing over a shorter distance.

The embodiments described in this document provide non-limiting examples of possible implementations of the present technology. Upon review of the present disclosure, a person of ordinary skill in the art will recognize that changes may be made to the embodiments described herein without departing from the scope of the present technology. For instance, the superimposition of protrusions (or chevrons) may also be applied to an exhaust mixer having struts integrated to the mixer itself. n integrated TEC-mixer i.e. wherein mixer and strut are integrated. Yet further modifications could be implemented by a person of ordinary skill in the art in view of the present disclosure, which modifications would be within the scope of the present technology.

## Claims

1. An exhaust mixer assembly for a gas turbine engine (10), the exhaust mixer assembly comprising:
a core passage (26) extending along a central axis (30) of the gas turbine engine (10) for directing a core gas flow (26a);
an outer annular passage (24) coaxially surrounding the core passage (26) for directing a bypass gas flow (24a); and
a lobed exhaust mixer (32) communicating with the core passage (26) and the outer annular passage (24), the lobed exhaust mixer (32) having an upstream end (36), a downstream end (38) and a lobed annular wall (34) extending therebetween, the lobed annular wall (34) defining a plurality of circumferentially distributed alternating inner radial lobes (42) and outer radial lobes (44), the inner radial and outer radial lobes (42, 44) having exits defining a mixing plane (M) at which the core gas flow (26a) and the bypass gas flow (24a) are mixed, the outer radial lobes (44) protruding radially into the annular outer passage (24) and the inner radial lobes (42) protruding radially into the core passage (26), the inner radial lobes (42) including troughs (46) forming an inner radial portion thereof and the outer radial lobes (44) including crests (48) forming an outer radial portion thereof, adjacent inner and outer radial lobes (42, 44) having radial walls (50) interconnecting adjacent troughs (46) and crests (48), one radial wall (50) of the radial walls (50) being positioned between each trough (46) and each crest (48), a plurality of protrusions (52) extending axially from a downstream end (38) of the lobed annular wall (34) to form a jagged trailing edge (54) of the lobed exhaust mixer (32), each of the plurality of protrusions (52) spaced apart from one another along the lobed annular wall (34) and protruding independently from one another from the lobed annular wall (34).

2. The exhaust mixer assembly as defined in claim 1, wherein the plurality of protrusions (52) are configured for promoting mixture of the core gas flow (26a) and the bypass gas flow (24a) by accelerating a rate of growth of developed vortices in a freeshear layer between the core gas flow (26a) and the bypass gas flow (24a) at the trailing edge (54) of the lobbed exhaust mixer (32), the configuration of the plurality of protrusions (52) being selected as a function of the freeshear layer.

3. The exhaust mixer assembly as defined in claim 2, wherein the plurality of protrusions (52) are dimensioned to correspond with a thickness of the freeshear layer at the trailing edge (54) of the lobed exhaust mixer (32).

4. The exhaust mixer assembly as defined in any preceding claim, wherein a spacing (56a) along the lobed annular wall (34) between each adjacent pair of the plurality of protrusions (52) is sized to correlate with a spacing of velocity streaks developed in a turbulent boundary layer upstream of the lobed exhaust mixer (32).

5. The exhaust mixer assembly as defined in any preceding claim, wherein the plurality of protrusions (52) are spaced apart from one another along the lobed annular wall (34) by gaps (56) of equal width (56a).

6. The exhaust mixer assembly as defined in any preceding claim, wherein the plurality of protrusions (52) are identically-shaped.

7. The exhaust mixer assembly as defined in any preceding claim, wherein the plurality of protrusions (52) each include a triangular shape.

8. The exhaust mixer assembly as defined in any preceding claim, wherein the lobed annular wall (34) includes a plurality of scalloped-shaped cutouts (58) therein.

9. The exhaust mixer assembly as defined in claim 8, wherein plurality of protrusions (52) extend along the jagged trailing edge (54) along the scalloped-shaped cutouts (58), the plurality of protrusions (52) extending in a direction normal to each of the plurality of protrusions' respective location along a respective scalloped-shaped cutout (58).

10. The exhaust mixer assembly as defined in claim 8 or 9, wherein the plurality of scalloped-shaped cutouts (58) are identically-shaped.

11. The exhaust mixer assembly as defined in any preceding claim, further comprising one or more struts (60) disposed in the main gas path (26), the one or more struts (60) operable to one or more of swirl and de-swirl a main gas flow before the main gas flow reaches the downstream end (38) of the lobed exhaust mixer (32).

12. A method for operating a turbofan engine (10), comprising:
directing a core gas flow (26a) through a main gas path (26) of the turbofan engine (10);
directing a bypass gas flow (24a) through an annular bypass passage (24) of the turbofan engine (10);
mixing the core gas flow (26a) and the bypass gas flow (24a) at a lobed exhaust mixer (32) in fluid communication with the main gas path (26) and the annular bypass passage (24), the lobed exhaust mixer (32) having an upstream end (36), a downstream end (38) and a lobed annular wall (34) extending therebetween, a plurality of protrusions (52) extending axially from a downstream end (38) of the lobed annular wall (34) to form a jagged trailing edge (54) of the lobed exhaust mixer (32), each of the plurality of protrusions (52) spaced apart from one another along the lobed annular wall (34) and protruding independently from one another from the lobed annular wall (34); and
exhausting a mixture of the core gas flow (26a) and the bypass gas flow (24a) from the turbofan engine (10).
